# EUROPEAN PATENT SPECIFICATION

(11) **EP 3 179 673 B1**
(45) Date of publication and mention of the grant of the patent: **14.11.2018**
(21) Application number: 15835464.7
(22) Date of filing: 29.05.2015
(51) Int. Cl.: H04L 12/24

(54) **ENERGY-SAVING CONTROL METHOD, MANAGEMENT SERVER AND NETWORK DEVICE**
ENERGIESPARENDES STEUERUNGSVERFAHREN, VERWALTUNGSSERVER UND NETZWERKVORRICHTUNG
PROCÉDÉ DE COMMANDE D'ÉCONOMIE D'ÉNERGIE, SERVEUR DE GESTION ET DISPOSITIF RÉSEAU

(30) Priority: 25.08.2014 CN 201410419870
(43) Date of publication of application: 14.06.2017
(73) Proprietor: Huawei Technologies Co. Ltd., Shenzhen, Guangdong 518129 (CN)
(72) Inventor: LIN, Yangbo, Shenzhen Guangdong 518129 (CN)
(74) Representative: Pfenning, Meinig & Partner mbB
(86) International application number: PCT/CN2015/080244
(87) International publication number: WO 2016/029726

(56) References cited:
- EP-A1- 2 518 945
- WO-A1-2014/083449
- WO-A1-2014/110453
- WO-A1-2014/125486
- US-A1- 2014 201 374
- DGS NFV-INF003: "Network Functions Virtualisation; Part 1: Infrastructure Architecture; Sub-part 3: Architecture of Compute Domain", ETSI DRAFT; DGS NFV-INF003, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.3.2, 27 June 2014 (2014-06-27), pages 1-70, XP014200260, [retrieved on 2014-06-27]

## Description

### TECHNICAL FIELD

Embodiments of the present invention relate to the field of network functions virtualization, and more specifically, to an energy-saving control method, a management server, and a network device.

### BACKGROUND

Network functions virtualization (NFV) is to consolidate many network equipment types onto industry-standard high-volume servers, switches, and storage devices by using a virtualization technology in the evolving information technology (Information Technology, IT) field, thereby changing a manner in which a network operator builds and operates a network and a network service (Network Service, NS). The NFV implements a network function by using software that can run on a series of industry-standard server hardware, thereby changing a network architecture. In addition, because the software may, according to a requirement, move dynamically or be instantiated at different locations in a network without a need to install a new device, a network operation is further changed.

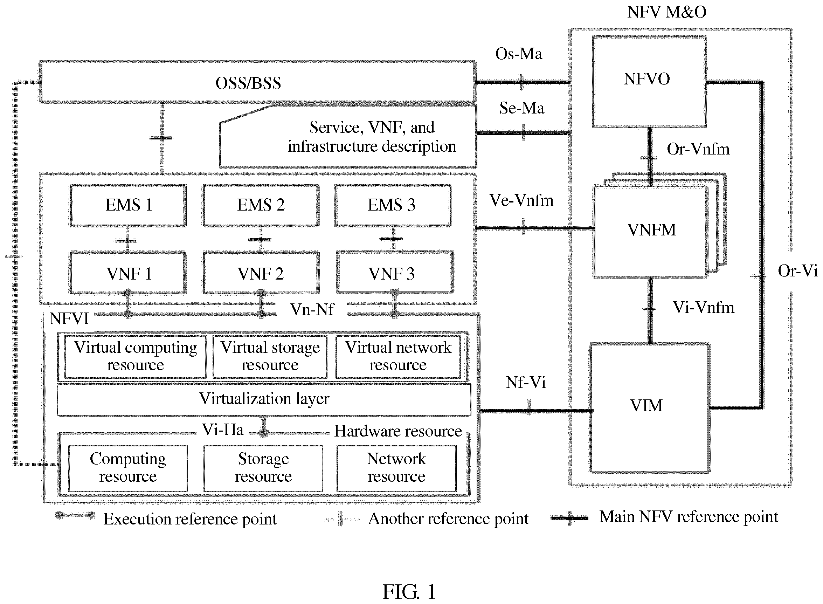

Referring to FIG. 1, an NFV reference architecture includes several main function components as follows:
An NFV infrastructure (NFVI) provides a virtualized resource required for supporting NFV execution, which includes commercial off the shelf (COTS) hardware, a necessary accelerator component, and a software layer that performs virtualization and abstraction on underlying hardware.

A virtual network function (VNF) is software implementation of a network function (NF) that can run on the NFVI, and may be further accompanied by an element management system (EMS) to understand and manage a single VNF and a characteristic of the single VNF. The VNF is equivalent to an entity of a network node, and is expected to be delivered as hardware-independent software only.

NFV management and orchestration (Management and Orchestration, M&O or MANO) includes orchestration, life cycle management on a physical and/or software resource for supporting infrastructure virtualization, and VNF life cycle management. The NFV M&O focuses on a virtualization-specific management task in an NFV framework. The NFV M&O also interacts with an operation support system (Operation Support System, OSS)/business support system (Business Support System, BSS) (outside the NFV) to allow the NFV to be integrated into an existing management prospect within an entire network range.

The foregoing components perform interaction by using a defined reference point, so that different entities can be clearly decoupled, thereby facilitating an open and innovative NFV ecosystem. A reference point between a VNF and an NFVI (and between internal NFVI entities) processes resource abstraction, resource virtualization, and VNF hosting, so that the VNF not only can move from one entity to another entity in the NFVI, but also is likely to select different underlying hardware. A reference point between an NFV M&O and each of a VNF and an NFVI (and between internal NFV M&O entities) processes management and operation of an NFV system. Related components are designed in a manner that reusing an existing solution (for example, a cloud management system) is allowed, and also interact with an existing OSS/BSS environment to which the NFV system needs to connect.

The following function components are further defined inside the NFV M&O:
An NFV orchestrator (NFVO) is mainly responsible for life cycle management of an NS to complete a network service orchestration function, and for NFVI resource orchestration among multiple VIMs to complete a resource orchestration function.

A VNF manager (VNFM) is responsible for life cycle management of a VNF instance. It is assumed that each VNF has an associated VNFM, and one VNFM may be designated to manage a single VNF instance or manage multiple VNF instances of a same type or different types. An available capability of the VNF manager includes VNF instantiation, NFVI resource configuration for the VNF, VNF instance updating, VNF instance scaling, VNF-instance-related collection of NFVI performance measurements and events and correlation to VNF-instance-related events, VNF instance assisted or automated healing, VNF instance termination, integrity management on a VNF instance throughout a life cycle of the VNF instance, undertaking an overall coordination and adaptation role for configuration and event reporting between an NFVI and an EMS, and the like.

A virtualized infrastructure manager (VIM) is responsible for controlling and managing computing, storage, and network resources of an NFVI, and is generally within an infrastructure sub-domain of one operator. One VIM may specialize in processing an NFVI resource of one type or may manage NFVI resources of multiple types. An available capability of the VIM includes orchestrating allocation/upgrade/release/reclamation of the NFVI resource, managing association between a virtualized resource and computing, storage, and network resources, managing a catalog of hardware resources (computing, storage, and network) and software resources (for example, hypervisors), collecting and forwarding performance measurements and events of virtualized resources, and the like.

Based on the foregoing architecture, an NS with a specific function may be implemented by using multiple NFs. An end-to-end NS implemented in a traditional network includes only physical network functions (Physical Network Function, PNF). For an end-to-end NS implemented in NFV, generally, there are still PNFs at two ends, but in the middle, some or all PNFs are replaced with VNFs. A function implemented by each NF and an external interface of each NF are irrelevant to whether the NF is a PNF or a VNF. A topological relationship among linking VNFs and PNFs may be described by using a VNF forwarding graph (VNF Forwarding Graph, VNFFG), and a characteristic of each NF is described by using a corresponding network function descriptor (NFD).

The VNF needs to be implemented based on virtual resources (including virtual computing, storage, and network resources) provided by the NFVI, these virtual resources are obtained by performing virtualization on corresponding physical resources. The PNF is directly implemented based on a physical resource. Unlike the traditional network in which all control is centralized into a network device integrated with software and hardware, the NFV introduces virtualization to implement decoupling of software and hardware of the network device, so that control over a service is mainly embodied in a PNF and VNF level, and control over performance is mainly embodied in the NFVI, especially in a hardware resource level of the NFVI.

Energy saving is a basic counter of the network device, an energy-saving control is mainly driven by a service layer (for example, usage reduction caused by service load reduction or transfer), and implementation of the energy-saving control mainly focuses on an infrastructure hardware resource layer (for example, putting an idle device offline to save power). In the NFV, an NF is separated from a resource for implementing the NF, for example, service load of the VNF is controlled by an NFVO, and a resource for implementing the VNF is managed by a VIM. Therefore, during energy-saving control, a problem of difficult coordinated control over the NF and the resource for implementing the NF occurs.
See DGS NFV-INF003, "Network Functions Virtualisation; Part 1: Infrastructure Architecture; Sub-part 3: Architecture of Compute Domain", ETSI DRAFT; DGS NFV-INF003, EUROPEAN TELECOMMUNICATIONS STANDARDS INSTITUTE (ETSI), 650, ROUTE DES LUCIOLES ; F-06921 SOPHIA-ANTIPOLIS ; FRANCE, (20140627), vol. ISG - NFV, no. V0.3.2, pages 1 - 70, XP014200260 [A], for in detail description of the NFV framework.

### SUMMARY

Embodiments of the present invention provide an energy-saving control method, a management server, and a network device to implement energy-saving control in the NFV field.

According to a first aspect, an energy-saving control method is provided, including: determining, by an NFVO, a current value of an energy efficiency status parameter of a first NF, where the energy efficiency status parameter is a parameter configured for the first NF, and an energy efficiency status parameter value indicates an energy saving state of the first NF; and sending, by the NFVO, first indication information to a management node of a first resource, where the first indication information includes the current value, the first indication information is used to instruct the management node to set an energy saving state of the first resource as an energy saving state indicated by the current value, and the first resource is a resource for implementing the first NF.

With reference to the first aspect, in an implementation manner of the first aspect, the determining, by an NFVO, a current value of an energy efficiency status parameter of a first NF includes: obtaining, by the NFVO, the current value according to a correspondence between current service load of the first NF and an energy efficiency status parameter value of the first NF.

With reference to the first aspect or any one of the implementation manner of the first aspect, in another implementation manner of the first aspect, the first NF is an NF whose service load changes, the current service load is changed service load of the first NF, and before the determining, by an NFVO, a current value of an energy efficiency status parameter of a first NF, the method further includes: performing, by the NFVO, a service load adjustment among multiple NFs; and selecting, by the NFVO, from the multiple NFs, the first NF whose service load changes.

With reference to the first aspect or any one of the foregoing implementation manners of the first aspect, in another implementation manner of the first aspect, before the performing, by the NFVO, a service load adjustment among multiple NFs, the method further includes: obtaining, by the NFVO, second indication information from a monitoring node that monitors usage of a second resource, where the second indication information is used to indicate that the usage of the second resource is less than a preset threshold; and the performing, by the NFVO, a service load adjustment among multiple NFs includes: performing, by the NFVO when obtaining the second indication information, the service load adjustment among the multiple NFs, so that energy efficiency status parameter values corresponding to service load of the NFs implemented by using the second resource are the same.

With reference to the first aspect or any one of the foregoing implementation manners of the first aspect, in another implementation manner of the first aspect, the second resource is a resource for implementing a VNF, and the monitoring node is a VIM that manages the second resource; or the second resource is a resource for implementing a PNF, and the monitoring node is an OSS/BSS; or the second resource is a resource for implementing a PNF, and the monitoring node is an EMS that manages the PNF.

With reference to the first aspect or any one of the foregoing implementation manners of the first aspect, in another implementation manner of the first aspect, before the performing, by the NFVO, a service load adjustment among multiple NFs, the method further includes: obtaining, by the NFVO, third indication information from a monitoring node that monitors usage of a second NF, where the third indication information is used to indicate that the usage of the second NF is less than a preset threshold, and the second NF is any NF in the multiple NFs; and the performing, by the NFVO, a service load adjustment among the multiple NFs includes: performing, by the NFVO when obtaining the third indication information, the service load adjustment among the multiple NFs.

With reference to the first aspect or any one of the foregoing implementation manners of the first aspect, in another implementation manner of the first aspect, the second NF is a VNF, and the monitoring node is a VNFM that manages the second NF; or the second NF is a VNF, and the monitoring node is an EMS that manages the second NF; or the second NF is a PNF, and the monitoring node is an OSS/BSS; or the second NF is a PNF, and the monitoring node is an EMS that manages the second NF.

With reference to the first aspect or any one of the foregoing implementation manners of the first aspect, in another implementation manner of the first aspect, the first NF belongs to a first NS managed by the NFVO, and before the determining, by an NFVO, a current value of an energy efficiency status parameter of a first NF, the method further includes: when orchestrating the first NS, synchronizing, between the NFVO and management nodes of all NFs in the first NS, energy efficiency status parameter values of all the NFs, so that the energy efficiency status parameter values of all the NFs that are recorded in the NFVO are the same as those in the management nodes of all the NFs.

With reference to the first aspect or any one of the foregoing implementation manners of the first aspect, in another implementation manner of the first aspect, the first NF is a VNF, and the management node of the first resource is a VIM; or the first NF is a PNF, and the management node of the first resource is an OSS/BSS; or the first NF is a PNF, and the management node of the first resource is an EMS that manages the first NF.

According to a second aspect, an energy-saving control method is provided, including: receiving first indication information sent by an NFVO, where the first indication information includes a current value of an energy efficiency status parameter of a first NF, the energy efficiency status parameter is a parameter configured for the first NF, and an energy efficiency status parameter value indicates an energy saving state of the first NF; and setting an energy saving state of a first resource as an energy saving state indicated by the current value, where the first resource is a resource for implementing the first NF.

With reference to the second aspect, in an implementation manner of the second aspect, the method further includes: monitoring usage of a second resource; and sending second indication information to the NFVO when the usage of the second resource is less than a preset threshold, where the second indication information is used to indicate that the usage of the second resource is less than the preset threshold.

With reference to the second aspect or any one of the foregoing implementation manner of the second aspect, in another implementation manner of the second aspect, the first NF is a VNF, and the method is executed by a VIM; or the first NF is a PNF, and the method is executed by an OSS/BSS; or the first NF is a PNF, and the method is executed by an EMS that manages the first NF.

According to a third aspect, an energy-saving control management server is provided, including: a processing unit, configured to determine a current value of an energy efficiency status parameter of a first NF, where the energy efficiency status parameter is a parameter configured for the first NF, and an energy efficiency status parameter value indicates an energy saving state of the first NF; and
a sending unit, configured to send first indication information to a management node of a first resource, where the first indication information includes the current value determined by the processing unit, and is used to instruct the management node to set an energy saving state of the first resource as an energy saving state indicated by the current value, and the first resource is a resource for implementing the first NF.

With reference to the third aspect, in an implementation manner of the third aspect, the processing unit is specifically configured to obtain the current value according to a correspondence between current service load of the first NF and an energy efficiency status parameter value of the first NF.

With reference to the third aspect or any one of the foregoing implementation manner of the third aspect, in another implementation manner of the third aspect, the first NF is an NF whose service load changes, the current service load is changed service load of the first NF, and the management server further includes: a first adjustment unit, configured to perform a service load adjustment among multiple NFs; a selection unit, configured to select, from the multiple NFs, the first NF whose service load changes.

With reference to the third aspect or any one of the foregoing implementation manners of the third aspect, in another implementation manner of the third aspect, the management server further includes: a first obtaining unit, configured to obtain second indication information from a monitoring node that monitors usage of a second resource, where the second indication information is used to indicate that the usage of the second resource is less than a preset threshold; and the first adjustment unit is specifically configured to perform the service load adjustment among the multiple NFs when the second indication information is obtained, so that energy efficiency status parameter values corresponding to service load of the NFs implemented by using the second resource are the same.

With reference to the third aspect or any one of the foregoing implementation manners of the third aspect, in another implementation manner of the third aspect, the management server further includes: a second obtaining unit, configured to obtain third indication information from a monitoring node that monitors usage of a second NF, where the third indication information is used to indicate that the usage of the second NF is less than a preset threshold, and the second NF is any NF in the multiple NFs; and the first adjustment unit is specifically configured to perform the service load adjustment among the multiple NFs when the third indication information is obtained.

With reference to the third aspect or any one of the foregoing implementation manners of the third aspect, in another implementation manner of the third aspect, the first NF belongs to a first NS managed by the management server, and the management server further includes: a synchronization unit, configured to: when orchestrating the first NS, synchronize, between the management server and management nodes of all NFs in the first NS, energy efficiency status parameter values of all the NFs, so that the energy efficiency status parameter values of all the NFs that are recorded in the management server are the same as those in the management nodes of all the NFs.

According to a fourth aspect, an energy-saving control network device is provided, including: a receiving unit, configured to receive first indication information sent by an NFVO, where the first indication information includes a current value of an energy efficiency status parameter of a first NF, the energy efficiency status parameter is a parameter configured for the first NF, and an energy efficiency status parameter value indicates an energy saving state of the first NF; and a setting unit, configured to set an energy saving state of a first resource as an energy saving state indicated by the current value received by the receiving unit, where the first resource is a resource for implementing the first NF.

With reference to the fourth aspect, in an implementation manner of the fourth aspect, the network device further includes: a monitoring unit, configured to monitor usage of a second resource; and a sending unit, configured to send second indication information to the NFVO when the usage of the second resource is less than a preset threshold, where the second indication information is used to indicate that the usage of the second resource is less than the preset threshold.

In the embodiments of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a diagram of an NFV reference architecture;
FIG. 2 is a schematic flowchart of an energy-saving control method according to an embodiment of the present invention;
FIG. 3 is a schematic flowchart of an energy-saving control method according to an embodiment of the present invention;
FIG. 4 is a schematic block diagram of a management server according to an embodiment of the present invention;
FIG. 5 is a schematic block diagram of a network device according to an embodiment of the present invention;
FIG. 6 is a schematic block diagram of a management server according to an embodiment of the present invention; and
FIG. 7 is a schematic block diagram of a network device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

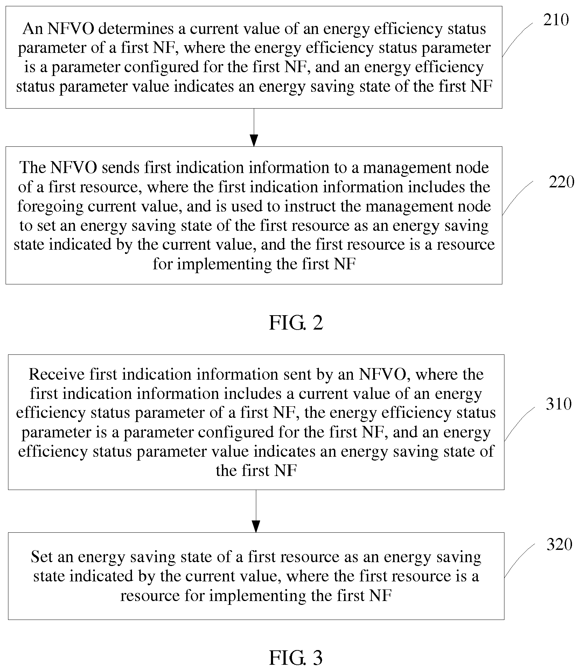

FIG. 2 is a schematic flowchart of an energy-saving control method according to an embodiment of the present invention. The method in FIG. 2 may be executed by an NFVO. The method in FIG. 2 includes the following steps:
210. The NFVO determines a current value of an energy efficiency status parameter of a first NF, where the energy efficiency status parameter is a parameter configured for the first NF, and an energy efficiency status parameter value indicates an energy saving state of the first NF.

The first NF may be an NF selected or determined by the NFVO from a managed NS. The NFVO orchestrates an NS (or referred to as creating or implementing an NS) by linking NFs. An end-to-end NS implemented in a traditional network includes only physical network functions (Physical Network Function, PNF). For an end-to-end NS implemented in NFV, generally there are still PNFs at two ends, but in the middle, some or all PNFs are replaced with VNFs. A function implemented by each NF and an external interface of each NF are irrelevant to whether the NF is a PNF or a VNF. A topological relationship among linking VNFs and PNFs may be described by using a VNF forwarding graph (VNF Forwarding Graph, VNFFG), and a characteristic of each NF is described by using a corresponding network function descriptor (Network Function Descriptor, NFD). The foregoing first NF may be any PNF or VNF in the orchestrated NS of the NFVO.

It should be understood that the first NF may be any NF in the NS managed by the NFVO, the NS includes multiple linking NFs. An energy efficiency status parameter may be configured for each NF in the multiple NFs, and an energy efficiency status parameter value of each NF indicates an energy saving state of each NF.

In the NFV field, a parameter that represents the energy saving state of the first NF may be configured in advance for the first NF, that is, the energy efficiency status (Energy Efficiency Status, EES) parameter. The energy efficiency status parameter may be set as a parameter of an on/off type, that is, the energy efficiency status parameter may include two values that respectively indicate that the first NF enters an energy saving state and that the first NF exits the energy saving state. For example, the energy efficiency status parameter values are "on" (On) and "off" (Off). For another example, the energy efficiency status parameter values are "true" (True) and "false" (False). Certainly, multiple values may be set for the energy efficiency status parameter, and respectively represent multiple energy saving states or levels. For example, the energy efficiency status parameter of the first NF may include three values that respectively indicate that the first NF is in an active state, a sleep state, and an inactive state. Alternatively, the energy efficiency status parameter value of the first NF is 1, 2, or 3, which respectively represents that an energy saving level of the first NF is level 1, level 2, or level 3. It should be noted that the foregoing manner of defining an energy efficiency status parameter value is merely an example for description. In practice, a specific manner of defining an energy efficiency status parameter value may be customized according to a requirement of the NS.

In addition, effectiveness of the energy efficiency status parameter of the first NF may accompany a life cycle of the first NF. When the first NF is a PNF, because the PNF is integrated with software and hardware and has a permanent life cycle, an energy efficiency status parameter of the PNF exists permanently. When the first NF is a VNF, the VNF is implemented by means of instantiation temporarily based on some physical resources by using a virtualization technology, a life cycle of the VNF is temporary, and therefore, the energy efficiency status parameter of the VNF may exist temporarily. In other words, the energy efficiency status parameter of the VNF takes effect when instantiation is performed on the VNF, and loses effectiveness when the instantiation of the VNF is terminated, that is, effectiveness of the energy efficiency status parameter accompanies the life cycle of the VNF.

The foregoing current value of the energy efficiency status parameter may be used to indicate a current energy saving state of the first NF. The current value of the energy efficiency status parameter of the first NF may be determined in multiple manners. For example, the NFVO may establish in advance a correspondence between NF service load and an NF energy efficiency status parameter value, and in this way, the NFVO may determine the current value of the energy efficiency status parameter of the first NF based on current service load of the first NF and the foregoing correspondence. The foregoing current value determining manner is subsequently described in detail with reference to a specific embodiment, and details are not described herein.

220. The NFVO sends first indication information to a management node of a first resource, where the first indication information includes the foregoing current value, and is used to instruct the management node to set an energy saving state of the first resource as an energy saving state indicated by the current value, and the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

It should be understood that a specific type of the foregoing management node of the first resource is related to a specific type of the first NF. For example, when the first NF is a PNF, the management node may be an OSS/BSS, or may be an EMS that manages the PNF. When the first NF is a VNF, the management node of the first resource may be a VIM. In addition, when the first NF is a VNF, the first resource may be a virtual resource and/or a physical resource for implementing the first NF, where the virtual resource may include a virtual computing resource, a virtual storage resource, or a virtual network resource, and the physical resource may include a physical computing resource, a physical storage resource, or a physical network resource.

Optionally, in an embodiment, step 210 may include: obtaining, by the NFVO, the current value of the energy efficiency status parameter of the first NF according to a correspondence between the current service load of the first NF and an energy efficiency status parameter value of the first NF.

For example, the energy efficiency status parameter of the first NF includes two values "on" and "off". The foregoing correspondence is as follows: Service load of the first NF is 0, and the energy efficiency status parameter value is "off"; service load of the first NF is not 0, and the energy efficiency status parameter value is "on". For another example, the energy efficiency status parameter of the first NF includes N values that are respectively used to indicate N energy saving state levels of the first NF. The foregoing correspondence is a one-to-one correspondence between the N values and N intervals in which a service load amount falls. The foregoing correspondence is used to indicate an interval in which the current service load of the first NF falls, and a value corresponding to the interval is used as the current value of the energy efficiency status parameter of the first NF.

Further, the foregoing first NF may be an NF whose service load changes, the foregoing current service load may be changed service load of the first NF, and before step 210, the method in FIG. 2 may further include: performing, by the NFVO, a service load adjustment among multiple NFs; and selecting, by the NFVO, from the foregoing multiple NFs, the first NF whose service load changes.

It may be understood that service load of some NFs changes after the NFVO performs the service load adjustment, and the NFVO may re-determine an energy efficiency status parameter value of the NF of which the service load changes. It should be noted that the NFVO may re-determine only a current value of an energy efficiency status parameter of an NF of which a service load change is relatively large. For example, the NFVO finds that service load of an NF reduces drastically or even is cleared, and re-determines a current value of an energy efficiency status parameter of the NF. Certainly, every time the NFVO finds an NF whose service load changes, the NFVO may recalculate a current value of an energy efficiency status parameter of the NF.

It should be noted that there may be multiple conditions for triggering the NFVO to perform the service load adjustment among the multiple NFs, and the following describes several embodiments in which the NFVO is triggered to perform the service load adjustment among the multiple NFs.

Optionally, in an embodiment, before the performing a service load adjustment among multiple NFs, the method may further include: obtaining, by the NFVO, second indication information from a monitoring node that monitors usage of a second resource, where the second indication information is used to indicate that the usage of the second resource is less than a preset threshold; and the foregoing performing a service load adjustment among multiple NFs may include: performing, by the NFVO when obtaining the second indication information, the service load adjustment among the multiple NFs, so that energy efficiency status parameter values corresponding to service load of the NFs implemented by using the second resource are the same.

Specifically, an "NF resource usage statistics mechanism" may be preset to monitor (or monitor and control) usage of an NF resource. The statistics mechanism herein may be a monitoring function (for example, querying or auditing) executed by the NFVO itself, or may be an event detecting and reporting function from another entity or another functional block (for example, a VIM). For example, when the foregoing second resource is a resource for implementing a VNF, the foregoing monitoring node may be the NFVO. For another example, when the foregoing second resource is a resource for implementing a VNF, the foregoing monitoring node may be a VIM that manages the second resource. For another example, when the foregoing second resource is a resource for implementing a PNF, the foregoing monitoring node may be an OSS/BSS. For another example, when the second resource is a resource for implementing a PNF, the foregoing monitoring node may be an EMS that manages the PNF. In addition, if the monitoring node is the NFVO, the foregoing second indication information may be a result found by the NFVO that the usage of the second resource is less than the preset threshold. If the monitoring node is another monitoring node such as a VNFM, the foregoing second indication information may be information that is reported by the another monitoring node and indicates that the usage of the second resource is less than the preset threshold.

It should be further noted that when the second resource is a resource for implementing a VNF, according to a correspondence (for example, may be obtained from a VNFM or a VIM in the prior art manner, which is not described in detail herein) between the VNF and the resource, the NFVO may find all VNFs that are implemented based on the second resource. Then the NFVO performs service load coordination among VNFs that are implemented based on different resources, for example, transfers service load from a VNF that is implemented based on the second resource to a VNF that is implemented based on another resource, or centralizes service load on VNFs that are implemented based on another resource into one VNF that is implemented by using the resource.

Optionally, in another embodiment, before the performing a service load adjustment among multiple NFs, the method may further include: obtaining, by the NFVO, third indication information from a monitoring node that monitors usage of a second NF, where the third indication information is used to indicate that the usage of the second NF is less than a preset threshold, and the second NF is any NF in the multiple NFs; and the foregoing performing a service load adjustment among multiple NFs may include: performing, by the NFVO when obtaining the third indication information, the service load adjustment among the multiple NFs.

Specifically, an "NF usage statistics mechanism" may be preset to monitor (or monitor and control) usage of an NF. When knowing, by using the statistics mechanism, that usage of a VNF decreases to a preset threshold, the NFVO may execute the foregoing energy-saving control. The statistics mechanism may be a monitoring function (for example, querying or auditing) executed by the NFVO itself, or may be an event detecting and reporting function from another entity or another functional block (for example, a VNFM). For example, the foregoing second NF is a VNF, and the foregoing monitoring node may be the NFVO; or the foregoing second NF is a VNF, and the foregoing monitoring node may be a VNFM that manages the second NF; or the foregoing second NF is a PNF, and the foregoing monitoring node may be an OSS/BSS; or the foregoing second NF is a PNF, and the foregoing monitoring node may be an EMS that manages the second NF.

Optionally, in another embodiment, the NFVO performs the service load adjustment among the multiple NFs according to a preset operation and maintenance plan. For example, the NFVO receives an operation and maintenance plan sent by an OSS/BSS, where the operation and maintenance plan indicates: at 18:00 every evening, clearing service load of half NFs in the NS and disabling these NFs, to save energy. At 18:00, the NFVO clears the service load of the half NFs in the managed NS, re-determines energy efficiency status parameter values of these NFs, and then sends the re-determined energy efficiency status parameter values to a management node of a resource for implementing these NFs. The management node sets an energy saving state of the resource as an energy saving state indicated by the foregoing re-determined energy efficiency status parameter values.

It should be noted that in the foregoing embodiment, when performing the service load adjustment among the multiple NFs, for a VNF, the NFVO may directly adjust service load of the VNF; for a PNF, the NFVO may adjust service load of the PNF by using an OSS/BSS and/or an EMS.

It should be further noted that when the first NF is a VNF, the method in FIG. 2 may further include: obtaining, by the NFVO, another VNF implemented by using the first resource; and adjusting, by the NFVO, service load of the another VNF, so that energy efficiency status parameter values corresponding to service load of all VNFs implemented on the first resource are the same.

In addition, when executing the foregoing energy-saving control, the NFVO may modify a VNFFG to reflect a change on an NF link caused by adjusting service load of a VNF and/or a PNF, where the change may include: addition, deletion, suspension, or the like of a VNF or a PNF. For example, after the foregoing energy-saving control procedure, service load of a VNF decreases to 0, and the NFVO may remove the VNF from the VNFFG, and change a link manner of another corresponding VNF.

In addition, when the management node of the first resource refuses to adjust the energy saving state of the first resource, the management node may return a failure response to the NFVO, and may further attach a more detailed failure cause.

Optionally, in an embodiment, the first NF belongs to a first NS managed by the NFVO, and before step 210, the method in FIG. 2 may further include: when orchestrating the first NS, synchronizing, between the NFVO and management nodes of all NFs in the first NS, energy efficiency status parameter values of all the NFs, so that the energy efficiency status parameter values of all the NFs that are recorded in the NFVO are the same as those in the management nodes of all the NFs.

Energy efficiency status parameters may be synchronized between the NFVO and an NF manager in multiple manners. In an implementation manner, when orchestrating an NS, the NFVO may calculate in advance an initial value of an energy efficiency status parameter of each NF in the NS according to a factor such as an application scenario or an actual requirement of the NS. Then the NFVO sends request information of invoking a PNF or creating a VNF to a manager of each NF, and sends the initial value of each NF to the manager of each NF in the request information, for example, directly attaches the initial value to an NFD. Optionally, in another implementation manner, when the NFVO orchestrates an NS, a related operation such as assigning a value to an energy efficiency status parameter may not be involved. When the NFVO requests to invoke a PNF or requests to create a VNF, a manager of the PNF or the VNF sets an initial energy saving state for the PNF or the VNF, and returns an energy efficiency status parameter value corresponding to the energy saving state to the NFVO. The NFVO uses the returned energy efficiency status parameter value as an initial value of the PNF or the VNF.

With reference to FIG. 2, the foregoing describes in detail the energy-saving control method in the embodiments of the present invention from a perspective of an NFVO. With reference to FIG. 3, the following describes in detail the energy-saving control method in the embodiment of the present invention from a management node side of a resource. It should be understood that the description from the management node side is the same as or corresponding to the description from the NFVO side, and repeated description is appropriately omitted to avoid repetition.

FIG. 3 is a schematic flowchart of an energy-saving control method according to an embodiment of the present invention. The method in FIG. 3 is executed by a management node of a first resource. When a first NF is a VNF, the management node may be a VIM. When the first NF is a PNF, the management node may be an OSS/BSS or an EMS. The method in FIG. 3 includes the following steps:
310. Receive first indication information sent by an NFVO, where the first indication information includes a current value of an energy efficiency status parameter of the first NF, the energy efficiency status parameter is a parameter configured for the first NF, and an energy efficiency status parameter value indicates an energy saving state of the first NF.
320. Set an energy saving state of the first resource as an energy saving state indicated by the current value, where the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

Optionally, in an embodiment, the method in FIG. 3 may further include: monitoring usage of a second resource; and sending second indication information to the NFVO when the usage of the second resource is less than a preset threshold, where the second indication information is used to indicate that the usage of the second resource is less than the preset threshold.

Optionally, in an embodiment, the first NF is a VNF, and the method in FIG. 3 is executed by a VIM; or the first NF is a PNF, and the method in FIG. 3 is executed by an OSS/BSS; or the first NF is a PNF, and the method in FIG. 3 is executed by an EMS that manages the first NF.

Optionally, in an embodiment, the energy efficiency status parameter of the first NF includes two values that respectively indicate that the first NF enters an energy saving state and exits the energy saving state; or the energy efficiency status parameter of the first NF includes three values that respectively indicate that the first NF is in an active state, a sleep state, and an inactive state; or the energy efficiency status parameter of the first NF includes N values that respectively indicate N energy saving levels of the first NF, where N ≥ 2.

It should be understood that in various embodiments of the present invention, sequence numbers of the foregoing processes do not mean execution sequences. The execution sequences of the processes should be determined according to functions and internal logic of the processes, and should not be construed as any limitation on the implementation processes of the embodiments of the present invention.

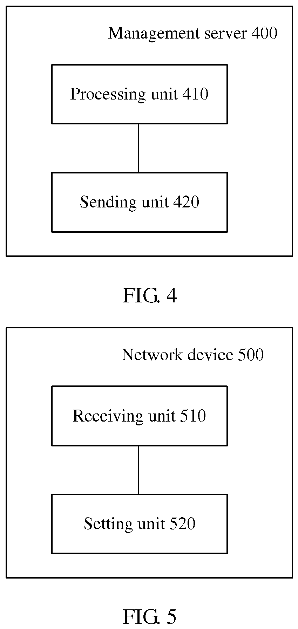

The foregoing describes in detail the energy-saving control method according to the embodiments of the present invention with reference to FIG. 1 to FIG. 3, and the following describes in detail a management server according to the embodiments of the present invention with reference to FIG. 4 to FIG. 7.

FIG. 4 is a schematic block diagram of a management server according to an embodiment of the present invention. A management server 400 in FIG. 4 can implement steps executed by the NFVO in FIG. 1 to FIG. 3, and details are not described herein to avoid repetition. The management server 400 includes:
a processing unit 410, configured to determine a current value of an energy efficiency status parameter of a first NF, where the energy efficiency status parameter is a parameter configured for the first NF, and an energy efficiency status parameter value indicates an energy saving state of the first NF; and
a sending unit 420, configured to send first indication information to a management node of a first resource, where the first indication information includes the current value determined by the processing unit 410, and is used to instruct the management node to set an energy saving state of the first resource as an energy saving state indicated by the current value, and the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

Optionally, in an embodiment, the processing unit 410 is specifically configured to obtain the current value of the energy efficiency status parameter of the first NF according to a correspondence between current service load of the first NF and an energy efficiency status parameter value of the first NF.

Optionally, in an embodiment, the first NF is an NF whose service load changes, the current service load is changed service load of the first NF, and the management server 400 further includes: a first adjustment unit, configured to perform a service load adjustment among multiple NFs; and a selection unit, configured to select, from the multiple NFs, the first NF whose service load changes.

Optionally, in an embodiment, the management server 400 further includes: a first obtaining unit, configured to obtain second indication information from a monitoring node that monitors usage of a second resource, where the second indication information is used to indicate that the usage of the second resource is less than a preset threshold; and the first adjustment unit is specifically configured to perform the service load adjustment among the multiple NFs when the second indication information is obtained, so that energy efficiency status parameter values corresponding to service load of the NFs implemented by using the second resource are the same.

Optionally, in an embodiment, the second resource is a resource for implementing a VNF, and the monitoring node is the management server 400; or the second resource is a resource for implementing a VNF, and the monitoring node is a VIM that manages the second resource; or the second resource is a resource for implementing a PNF, and the monitoring node is an OSS/BSS; or the second resource is a resource for implementing a PNF, and the monitoring node is an EMS that manages the PNF.

Optionally, in an embodiment, the monitoring node is the management server 400, the second indication information is a query result of the management server 400, and the first obtaining unit is specifically configured to query the usage of the second resource to obtain the query result.

Optionally, in an embodiment, the monitoring node is a management node of the second resource, and the first obtaining unit is specifically configured to receive the second indication information from the management node of the second resource.

Optionally, in an embodiment, the management server 400 further includes: a second obtaining unit, configured to obtain third indication information from a monitoring node that monitors usage of a second NF, where the third indication information is used to indicate that the usage of the second NF is less than a preset threshold, and the second NF is any NF in the multiple NFs; and the first adjustment unit is specifically configured to perform the service load adjustment among the multiple NFs when the third indication information is obtained.

Optionally, in an embodiment, the second NF is a VNF, and the monitoring node is the management server 400; or the second NF is a VNF, and the monitoring node is a VNFM that manages the second NF; or the second NF is a VNF, and the monitoring node is an EMS that manages the second NF; or the second NF is a PNF, and the monitoring node is an OSS/BSS; or the second NF is a PNF, and the monitoring node is an EMS that manages the second NF.

Optionally, in an embodiment, the monitoring node is the management server 400, the third indication information is a query result of the management server 400, and the second obtaining unit is specifically configured to query the usage of the second NF to obtain the query result.

Optionally, in an embodiment, the monitoring node is a management node of the second NF, and the second obtaining unit is specifically configured to receive the third indication information from the management node of the second NF.

Optionally, in an embodiment, the first adjustment unit is specifically configured to perform the service load adjustment among the multiple NFs according to a preset operation and maintenance plan.

Optionally, in an embodiment, the first NF is a VNF, and the management server 400 further includes: a third obtaining unit, configured to obtain another VNF implemented by using the first resource; and a second adjustment unit, configured to adjust service load of the another VNF, so that energy efficiency status parameter values corresponding to service load of all VNFs implemented on the first resource are the same.

Optionally, in an embodiment, the first NF belongs to a first NS managed by the management server 400, and the management server 400 further includes: a synchronization unit, configured to: when orchestrating the first NS, synchronize, between the management server 400 and management nodes of all NFs in the first NS, energy efficiency status parameter values of all the NFs, so that the energy efficiency status parameter values of all the NFs that are recorded in the management server 400 are the same as those in the management nodes of all the NFs.

Optionally, in an embodiment, the first NF is a VNF, and the management node of the first resource is a VIM; or the first NF is a PNF, and the management node of the first resource is an OSS/BSS; or the first NF is a PNF, and the management node of the first resource is an EMS that manages the first NF.

Optionally, in an embodiment, the energy efficiency status parameter of the first NF includes two values that respectively indicate that the first NF enters an energy saving state and exits the energy saving state; or the energy efficiency status parameter of the first NF includes three values that respectively indicate that the first NF is in an active state, a sleep state, and an inactive state; or the energy efficiency status parameter of the first NF includes N values that respectively indicate N energy saving levels of the first NF, where N ≥ 2.

FIG. 5 is a schematic block diagram of a network device according to an embodiment of the present invention. A network device 500 in FIG. 5 can implement steps executed by the management node of the first resource in FIG. 1 to FIG. 3, and details are not described herein to avoid repetition. The network device 500 includes:
a receiving unit 510, configured to receive first indication information sent by an NFVO, where the first indication information includes a current value of an energy efficiency status parameter of a first NF, the energy efficiency status parameter is a parameter configured for the first NF, and an energy efficiency status parameter value indicates an energy saving state of the first NF; and
a setting unit 520, configured to set an energy saving state of a first resource as an energy saving state indicated by the current value received by the receiving unit 510, where the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

Optionally, in an embodiment, the network device 500 further includes: a monitoring unit, configured to monitor usage of a second resource; and a sending unit, configured to send second indication information to the NFVO when the usage of the second resource is less than a preset threshold, where the second indication information is used to indicate that the usage of the second resource is less than the preset threshold.

Optionally, in an embodiment, the first NF is a VNF, and the network device 500 is a VIM; or the first NF is a PNF, and the network device 500 is an OSS/BSS; or the first NF is a PNF, and the network device 500 is an EMS that manages the first NF.

Optionally, in an embodiment, the energy efficiency status parameter of the first NF includes two values that respectively indicate that the first NF enters an energy saving state and exits the energy saving state; or the energy efficiency status parameter of the first NF includes three values that respectively indicate that the first NF is in an active state, a sleep state, and an inactive state; or the energy efficiency status parameter of the first NF includes N values that respectively indicate N energy saving levels of the first NF, where N ≥ 2.

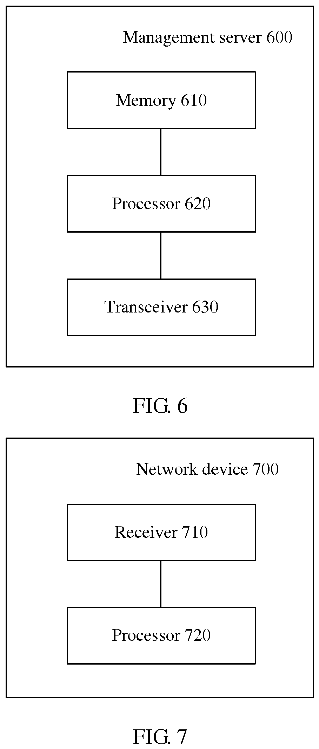

FIG. 6 is a schematic block diagram of a management server according to an embodiment of the present invention. A management server 600 in FIG. 6 can implement steps executed by the NFVO in FIG. 1 to FIG. 3, and details are not described herein to avoid repetition. The management server 600 includes:
a memory 610, configured to store a program;
a processor 620, configured to execute the program, where during execution of the program, the processor 620 is specifically configured to determine a current value of an energy efficiency status parameter of a first NF, the energy efficiency status parameter is a parameter configured for the first NF, and an energy efficiency status parameter value indicates an energy saving state of the first NF; and
a transceiver 630, configured to send first indication information to a management node of a first resource, where the first indication information includes the current value determined by the processor 620, and is used to instruct the management node to set an energy saving state of the first resource as an energy saving state indicated by the current value, and the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

Optionally, in an embodiment, the processor 620 is specifically configured to obtain the current value of the energy efficiency status parameter of the first NF according to a correspondence between current service load of the first NF and an energy efficiency status parameter value of the first NF.

Optionally, in an embodiment, the first NF is an NF whose service load changes, the current service load is changed service load of the first NF, and the processor 620 is specifically configured to: perform a service load adjustment among multiple NFs; and select, from the multiple NFs, the first NF whose service load changes.

Optionally, in an embodiment, the processor 620 is specifically configured to: obtain second indication information from a monitoring node that monitors usage of a second resource, where the second indication information is used to indicate that the usage of the second resource is less than a preset threshold; and perform the service load adjustment among the multiple NFs when obtaining the second indication information, so that energy efficiency status parameter values corresponding to service load of the NFs implemented by using the second resource are the same.

Optionally, in an embodiment, the second resource is a resource for implementing a VNF, and the monitoring node is the management server 600; or the second resource is a resource for implementing a VNF, and the monitoring node is a VIM that manages the second resource; or the second resource is a resource for implementing a PNF, and the monitoring node is an OSS/BSS; or the second resource is a resource for implementing a PNF, and the monitoring node is an EMS that manages the PNF.

Optionally, in an embodiment, the monitoring node is the management server 600, the second indication information is a query result of the management server 600, and the processor 620 is specifically configured to query the usage of the second resource to obtain the query result.

Optionally, in an embodiment, the monitoring node is a management node of the second resource, and the processor 620 is specifically configured to receive the second indication information from the management node of the second resource.

Optionally, in an embodiment, the processor 620 is specifically configured to obtain third indication information from a monitoring node that monitors usage of a second NF, where the third indication information is used to indicate that the usage of the second NF is less than a preset threshold, and the second NF is any NF in the multiple NFs; and the processor 620 is specifically configured to perform the service load adjustment among the multiple NFs when obtaining the third indication information.

Optionally, in an embodiment, the second NF is a VNF, and the monitoring node is the management server 600; or the second NF is a VNF, and the monitoring node is a VNFM that manages the second NF; or the second NF is a VNF, and the monitoring node is an EMS that manages the second NF; or the second NF is a PNF, and the monitoring node is an OSS/BSS; or the second NF is a PNF, and the monitoring node is an EMS that manages the second NF.

Optionally, in an embodiment, the monitoring node is the management server 600, the third indication information is a query result of the management server 600, and the processor 620 is configured to query the usage of the second NF to obtain the query result.

Optionally, in an embodiment, the monitoring node is a management node of the second NF, and the processor 620 is specifically configured by the management server 600 to receive the third indication information from the management node of the second NF.

Optionally, in an embodiment, the processor 620 is specifically configured to perform the service load adjustment among the multiple NFs according to a preset operation and maintenance plan.

Optionally, in an embodiment, the first NF is a VNF, and the processor 620 is specifically configured to: obtain another VNF implemented by using the first resource; and adjust service load of the another VNF, so that energy efficiency status parameter values corresponding to service load of all VNFs implemented on the first resource are the same.

Optionally, in an embodiment, the first NF belongs to a first NS managed by the management server 600, and the processor 620 is specifically configured to: when orchestrating the first NS, synchronize, between the management server 600 and management nodes of all NFs in the first NS, energy efficiency status parameter values of all the NFs, so that the energy efficiency status parameter values of all the NFs that are recorded in the management server 600 are the same as those in the management nodes of all the NFs.

Optionally, in an embodiment, the first NF is a VNF, and the management node of the first resource is a VIM; or the first NF is a PNF, and the management node of the first resource is an OSS/BSS; or the first NF is a PNF, and the management node of the first resource is an EMS that manages the first NF.

Optionally, in an embodiment, the energy efficiency status parameter of the first NF includes two values that respectively indicate that the first NF enters an energy saving state and exits the energy saving state; or the energy efficiency status parameter of the first NF includes three values that respectively indicate that the first NF is in an active state, a sleep state, and an inactive state; or the energy efficiency status parameter of the first NF includes N values that respectively indicate N energy saving levels of the first NF, where N ≥ 2.

FIG. 7 is a schematic block diagram of a network device according to an embodiment of the present invention. A network device 700 in FIG. 7 can implement steps executed by the management node of the first resource in FIG. 1 to FIG. 3, and details are not described herein to avoid repetition. The network device 700 includes:
a receiver 710, configured to receive first indication information sent by an NFVO, where the first indication information includes a current value of an energy efficiency status parameter of a first NF, the energy efficiency status parameter is a parameter configured for the first NF, and an energy efficiency status parameter value indicates an energy saving state of the first NF; and
a processor 720, configured to set an energy saving state of a first resource as an energy saving state indicated by the current value received by the receiver 710, where the first resource is a resource for implementing the first NF.

In this embodiment of the present invention, an energy efficiency status parameter that can indicate an energy saving state of a first NF is configured in advance for the first NF, and an NFVO first determines a current value of the energy efficiency status parameter of the first NF, and sends the current value to a management node of a first resource, so that the management node adjusts an energy saving state of the first resource to an energy saving state indicated by the current value, that is, the energy saving state of the first NF and the energy saving state of the first resource for implementing the first NF are adjusted to be consistent by transferring an energy efficiency status parameter value of the first NF between the NFVO and the resource management node, thereby resolving a problem of difficult coordinated control between an NF and a resource for implementing the NF during energy-saving control in the NFV field.

Optionally, in an embodiment, the processor 720 is specifically configured to: monitor usage of a second resource; and send second indication information to the NFVO when the usage of the second resource is less than a preset threshold, where the second indication information is used to indicate that the usage of the second resource is less than the preset threshold.

Optionally, in an embodiment, the first NF is a VNF, and the network device 700 is a VIM; or the first NF is a PNF, and the network device 700 is an OSS/BSS; or the first NF is a PNF, and the network device 700 is an EMS that manages the first NF.

Optionally, in an embodiment, the energy efficiency status parameter of the first NF includes two values that respectively indicate that the first NF enters an energy saving state and exits the energy saving state; or the energy efficiency status parameter of the first NF includes three values that respectively indicate that the first NF is in an active state, a sleep state, and an inactive state; or the energy efficiency status parameter of the first NF includes N values that respectively indicate N energy saving levels of the first NF, where N ≥ 2.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An energy-saving control method, the method comprising the steps of :
Determining (210), by a network functions virtualization orchestrator, NFVO, a current value of an energy efficiency status parameter of a first network function, NF, wherein the energy efficiency status parameter is a parameter configured for the first NF, and an energy efficiency status parameter value indicates an energy saving state of the first NF; and
Sending (220), by the NFVO, first indication information to a management node of a first resource, wherein the first indication information comprises the current value of the energy efficiency status parameter, and is used to instruct the management node to set an energy saving state of the first resource as an energy saving state indicated by the current value, and the first resource is a resource for implementing the first NF.

2. The method according to claim 1, wherein the determining (210), by an NFVO, a current value of an energy efficiency status parameter of a first NF comprises:
obtaining, by the NFVO, the current value according to a correspondence between current service load of the first NF and the energy efficiency status parameter value of the first NF.

3. The method according to claim 2, wherein the first NF is an NF whose service load changes, the current service load is changed service load of the first NF, and before the determining, by the NFVO, the current value of the energy efficiency status parameter of the first NF, the method further comprises:
performing, by the NFVO, a service load adjustment among multiple NFs; and
selecting, by the NFVO, from the multiple NFs, the first NF whose service load changes.

4. The method according to claim 3, wherein before the performing, by the NFVO, the service load adjustment among multiple NFs, the method further comprises:
obtaining, by the NFVO, second indication information from a monitoring node that monitors usage of a second resource, wherein the second indication information is used to indicate that the usage of the second resource is less than a preset threshold; and
the performing, by the NFVO, the service load adjustment among multiple NFs comprises:
performing, by the NFVO when obtaining the second indication information, the service load adjustment among the multiple NFs, so that energy efficiency status parameter values corresponding to service load of the NFs implemented by using the second resource are the same.

5. The method according to claim 4, wherein:
the second resource is a resource for implementing a virtual network function, VNF, and the monitoring node is a virtualized infrastructure manager, VIM, that manages the second resource; or
the second resource is a resource for implementing a physical network function PNF, and the monitoring node is an operation support system OSS/business support system BSS; or
the second resource is a resource for implementing a PNF, and the monitoring node is an element management system, EMS, that manages the PNF.

6. The method according to claim 3, wherein before the performing, by the NFVO, the service load adjustment among multiple NFs, the method further comprises:
obtaining, by the NFVO, third indication information from a monitoring node that monitors usage of a second NF, wherein the third indication information is used to indicate that the usage of the second NF is less than a preset threshold, and the second NF is any NF in the multiple NFs; and
the performing, by the NFVO, the service load adjustment among the multiple NFs comprises:
performing, by the NFVO when obtaining the third indication information, the service load adjustment among the multiple NFs.

7. The method according to claim 6, wherein:
the second NF is a VNF, and the monitoring node is a virtualized network function manager ,VNFM, that manages the second NF; or
the second NF is a VNF, and the monitoring node is an EMS that manages the second NF; or
the second NF is a PNF, and the monitoring node is an OSS/BSS; or
the second NF is a PNF, and the monitoring node is an EMS that manages the second NF.

8. The method according to any one of claims 1 to 7, wherein the first NF belongs to a first network service, NS, managed by the NFVO, and before the determining, by an NFVO, a current value of an energy efficiency status parameter of a first NF, the method further comprises:
when orchestrating the first NS, synchronizing, between the NFVO and management nodes of all NFs in the first NS, energy efficiency status parameter values of all the NFs, so that the energy efficiency status parameter values of all the NFs that are recorded in the NFVO are the same as those in the management nodes of all the NFs.

9. The method according to any one of claims 1 to 8, wherein:
the first NF is a VNF, and the management node of the first resource is a VIM; or
the first NF is a PNF, and the management node of the first resource is an OSS/BSS; or
the first NF is a PNF, and the management node of the first resource is an EMS that manages the first NF.

10. An energy-saving control method, the method comprising the steps of :
receiving (310) first indication information sent by a network functions virtualization orchestrator, NFVO, wherein the first indication information comprises a current value of an energy efficiency status parameter of a first network function, NF, the energy efficiency status parameter is a parameter configured for the first NF, and an energy efficiency status parameter value indicates an energy saving state of the first NF; and
setting (320) an energy saving state of a first resource as an energy saving state indicated by the current value, wherein the first resource is a resource for implementing the first NF.

11. The method according to claim 10, wherein the method further comprises:
monitoring usage of a second resource; and
sending second indication information to the NFVO when the usage of the second resource is less than a preset threshold, wherein the second indication information is used to indicate that the usage of the second resource is less than the preset threshold.

12. The method according to claim 10 or 11, wherein:
the first NF is a virtualized network function, VNF, and the method is executed by a virtualized infrastructure manager, VIM; or
the first NF is a physical network function, PNF, and the method is executed by an operation support system OSS/business support system BSS; or
the first NF is a PNF, and the method is executed by an element management system, EMS, that manages the first NF.

13. A management server (400), comprising:
a processing unit (410), configured to determine a current value of an energy efficiency status parameter of a first network function, NF, wherein the energy efficiency status parameter is a parameter configured for the first NF, and an energy efficiency status parameter value indicates an energy saving state of the first NF; and
a sending unit (420), configured to send first indication information to a management node of a first resource, wherein the first indication information comprises the current value that is of the energy efficiency status parameter and determined by the processing unit (410), and is used to instruct the management node to set an energy saving state of the first resource as an energy saving state indicated by the current value, and the first resource is a resource for implementing the first NF.

14. The management server (400) according to claim 13, wherein the processing unit (410) is configured to obtain the current value according to a correspondence between current service load of the first NF and the energy efficiency status parameter value of the first NF.

15. The management server (400) according to claim 13, wherein the first NF is an NF whose service load changes, the current service load is changed service load of the first NF, and the management server (400) further comprises:
a first adjustment unit, configured to perform a service load adjustment among multiple NFs; and
a selection unit, configured to select, from the multiple NFs, the first NF whose service load changes.

16. The management server (400) according to claim 15, wherein the management server (400) further comprises:
a first obtaining unit, configured to obtain second indication information from a monitoring node that monitors usage of a second resource, wherein the second indication information is used to indicate that the usage of the second resource is less than a preset threshold; and
the first adjustment unit is configured to perform the service load adjustment among the multiple NFs when the second indication information is obtained, so that energy efficiency status parameter values corresponding to service load of the NFs implemented by using the second resource are the same.

17. The management server (400) according to claim 15, wherein the management server (400) further comprises:
a second obtaining unit, configured to obtain third indication information from a monitoring node that monitors usage of a second NF, wherein the third indication information is used to indicate that the usage of the second NF is less than a preset threshold, and the second NF is any NF in the multiple NFs; and
the first adjustment unit is configured to perform the service load adjustment among the multiple NFs when the third indication information is obtained.

18. The management server (400) according to any one of claims 13 to 17, wherein the first NF belongs to a first network service, NS, managed by the management server (400), and the management server (400) further comprises a synchronization unit, configured to: when orchestrating the first NS, synchronize, between the management server (400) and management nodes of all NFs in the first NS, energy efficiency status parameter values of all the NFs, so that the energy efficiency status values of all the NFs that are recorded in the management server are the same as those in the management nodes of all the NFs.

19. A network device (500), comprising:
a receiving unit (510), configured to receive first indication information sent by a network functions virtualization orchestrator NFVO, wherein the first indication information comprises a current value of an energy efficiency status parameter of a first network function, NF, the energy efficiency status parameter is a parameter configured for the first NF, and different values of the energy efficiency status parameter indicate different energy saving states of the first NF; and
a setting unit (520), configured to set an energy saving state of a first resource as an energy saving state indicated by the current value received by the receiving unit (510), wherein the first resource is a resource for implementing the first NF.

20. The network device (500) according to claim 19, wherein the network device (500) further comprises:
a monitoring unit, configured to monitor usage of a second resource; and
a sending unit, configured to send second indication information to the NFVO when the usage of the second resource is less than a preset threshold, wherein the second indication information is used to indicate that the usage of the second resource is less than the preset threshold.

## Patentansprüche

1. Energiesparsteuerverfahren, wobei das Verfahren die folgenden Schritte umfasst:
Ermitteln (210) mithilfe eines Orchestrierers virtualisierter Netzwerkfunktionen (Network Functions Virtualization Orchestrator, NFVO) eines aktuellen Wertes eines Energieeffizienzzustandsparameters einer ersten Netzwerkfunktion, NF, wobei der Energieeffizienzzustandsparameter ein Parameter ist, der für die erste NF konfiguriert ist, und wobei ein Energieeffizienzzustandsparameter einen Energiesparzustand der ersten NF anzeigt; und
Senden (220) von ersten Anzeigeinformationen von dem NFVO an einen Verwaltungsknoten einer ersten Ressource, wobei die ersten Anzeigeinformationen den aktuellen Wert des Energieeffizienzzustandsparameters umfassen und verwendet werden, um den Verwaltungsknoten anzuweisen, einen Energiesparzustand der ersten Ressource als einen Energiesparzustand einzustellen, der durch den aktuellen Wert angezeigt wird, und wobei die erste Ressource eine Ressource zum Umsetzen der ersten NF ist.

2. Verfahren nach Anspruch 1, wobei das Ermitteln (210) eines aktuellen Wertes eines Energieeffizienzzustandsparameters einer ersten NF mithilfe des NFVO umfasst:
Erhalten, in dem NFVO, des aktuellen Wertes gemäß einer Entsprechung zwischen einer aktuellen Dienstlast der ersten NF und dem Energieeffizienzzustandsparameterwert der ersten NF.

3. Verfahren nach Anspruch 2, wobei die erste NF eine NF ist, deren Dienstlast sich ändert, wobei die aktuelle Dienstlast eine veränderte Dienstlast der ersten NF ist und wobei das Verfahren vor dem Ermitteln des aktuellen Wertes des Energieeffizienzzustandsparameters der ersten NF mithilfe des NFVO außerdem umfasst:
Ausführen einer Dienstlastanpassung an mehreren NFs durch den NFVO, und
Auswählen durch den NFVO der ersten NF, deren Dienstlast sich ändert, aus den mehreren NFs.

4. Verfahren nach Anspruch 3, wobei das Verfahren vor dem Ausführen der Dienstlastanpassung an mehreren NFs durch den NFVO außerdem umfasst:
Erhalten, in dem NFVO, von zweiten Anzeigeinformationen von einem Überwachungsknoten, der die Nutzung einer zweiten Ressource überwacht, wobei die zweiten Anzeigeinformationen verwendet werden, um anzuzeigen, dass die Nutzung der zweiten Ressource geringer als ein voreingestellter Schwellenwert ist; und
wobei das Ausführen einer Dienstlastanpassung an mehreren NFs durch den NFVO umfasst:
Ausführen der Dienstlastanpassung an den mehreren NFs durch den NFVO, wenn die zweiten Anzeigeinformationen erhalten werden, sodass die Energieeffizienzzustandsparameterwerte, die der Dienstlast der NFs entsprechen, die mithilfe der zweiten Ressource umgesetzt werden, gleich sind.

5. Verfahren nach Anspruch 4, wobei:
die zweite Ressource eine Ressource zum Umsetzen einer virtuellen Netzwerkfunktion, VNF, ist, und der Überwachungsknoten ein virtualisierter Infrastrukturmanager, VIM ist, der die zweite Ressource verwaltet; oder
die zweite Ressource eine Ressource zum Umsetzen einer physischen Netzwerkfunktion, PNF, ist, und der Überwachungsknoten ein Betriebsunterstützungssystem (Operation Support System, OSS)/Unternehmensunterstützungssystem (Business Support System, BSS) ist; oder
die zweite Ressource eine Ressource zum Umsetzen einer PNF ist, und der Überwachungsknoten ein Elementverwaltungssystem (Element Management System, EMS) ist, das die PNF verwaltet.

6. Verfahren nach Anspruch 3, wobei das Verfahren vor dem Ausführen der Dienstlastanpassung an den mehreren NFs durch den NFVO außerdem umfasst:
Erhalten, in dem NFVO, von dritten Anzeigeinformationen von einem Überwachungsknoten, der die Nutzung einer zweiten NF überwacht, wobei die dritten Anzeigeinformationen verwendet werden, um anzuzeigen, dass die Nutzung der zweiten NF geringer als ein voreingestellter Schwellenwert ist; und wobei die zweite NF eine beliebige NF aus den mehreren NFs ist; und
wobei das Ausführen der Dienstlastanpassung an den mehreren NFs durch den NFVO umfasst:
Ausführen der Dienstlastanpassung an den mehreren NFs durch den NFVO, wenn die dritten Anzeigeinformationen erhalten werden.

7. Verfahren nach Anspruch 6, wobei:
die zweite NF eine VNF ist und der Überwachungsknoten ein virtualisierter Netzwerkfunktionsmanager, VNFM, ist, der die zweite NF verwaltet; oder
die zweite NF eine VNF ist und der Überwachungsknoten ein EMS ist, das die zweite NF verwaltet; oder
die zweite NF eine PNF ist und der Überwachungsknoten ein OSS/BSS ist; oder
die zweite NF eine PNF ist und der Überwachungsknoten ein EMS ist, das die zweite NF verwaltet.

8. Verfahren nach einem der Ansprüche 1 bis 7, wobei die erste NF zu einem ersten Netzwerkdienst (Network Service, NS) gehört, der von dem NFVO verwaltet wird, und wobei das Verfahren vor dem Ermitteln eines aktuellen Wertes eines Energieeffizienzzustandsparameters einer ersten NF durch den NFVO außerdem umfasst:
wenn die erste NF orchestriert wird, Synchronisieren zwischen dem NFVO und den Verwaltungsknoten aller NFs in dem ersten NS, der Energieeffizienzzustandsparameterwerte aller NFs, sodass die Energieeffizienzzustandsparameterwerte aller NFs, die in dem NFVO aufgezeichnet werden, gleich jenen Werten in den Verwaltungsknoten aller NFs sind.

9. Verfahren nach einem der Ansprüche 1 bis 8, wobei:
die erste NF ein VNF ist und der Verwaltungsknoten der ersten Ressource ein VIM ist; oder
die erste NF eine PNF ist und der Verwaltungsknoten der ersten Ressource ein OSS/BSS ist; oder
die erste NF eine PNF ist und der Verwaltungsknoten der ersten Ressource ein EMS ist, das die erste NF verwaltet.

10. Energiesparsteuerverfahren, wobei das Verfahren die folgenden Schritte umfasst:
Empfangen (310) erster Anzeigeinformationen, die von einem Orchestrierer virtualisierter Netzwerkfunktionen (Network Functions Virtualization Orchestrator, NFVO) gesendet werden, wobei die ersten Anzeigeinformationen einen aktuellen Wert eines Energieeffizienzzustandsparameters einer ersten Netzwerkfunktion, NF, umfassen, wobei der Energieeffizienzzustandsparameter ein Parameter ist, der für die erste NF konfiguriert ist, und wobei ein Energieeffizienzzustandsparameterwert einen Energiesparzustand der ersten NF anzeigt; und
Einstellen (320) eines Energiesparzustands einer ersten Ressource als einen Energiesparzustand, der durch den aktuellen Wert angezeigt wird, wobei die erste Ressource eine Ressource zum Umsetzen der ersten NF ist.

11. Verfahren nach Anspruch 10, wobei das Verfahren außerdem umfasst:
Überwachen einer Nutzung einer zweiten Ressource; und
Senden zweiter Anzeigeinformationen an den NFVO, wenn die Nutzung der zweiten Ressource geringer als ein voreingestellter Schwellenwert ist, wobei die zweiten Anzeigeinformationen verwendet werden, um anzuzeigen, dass die Nutzung der zweiten Ressource geringer als der voreingestellte Schwellenwert ist.

12. Verfahren nach Anspruch 10 oder 11, wobei:
die erste NF eine virtualisierte Netzwerkfunktion, VNF, ist, und das Verfahren durch einen virtualisierten Infrastrukturmanager, VIM, ausgeführt wird; oder
die erste NF eine physische Netzwerkfunktion, PNF, ist, und das Verfahren durch ein Betriebsunterstützungssystem (Operation Support System, OSS)/Unternehmensunterstützungssystem (Business Support System, BSS) ausgeführt wird; oder
die erste NF eine PNF ist, und das Verfahren durch ein Elementverwaltungssystem (Element Management System, EMS) ausgeführt wird, das die erste NF verwaltet.

13. Verwaltungsserver (400), umfassend:
eine Verarbeitungseinheit (410), die konfiguriert ist, um einen aktuellen Wert eines Energieeffizienzzustandsparameters einer ersten Netzwerkfunktion, NF, zu ermitteln, wobei der Energieeffizienzzustandsparameter ein Parameter ist, der für die erste NF konfiguriert ist, und wobei ein Energieeffizienzzustandsparameterwert einen Energiesparzustand der ersten NF anzeigt; und
eine Sendeeinheit (420), die konfiguriert ist, um erste Anzeigeinformationen an einen Verwaltungsknoten einer ersten Ressource zu senden, wobei die ersten Anzeigeinformationen den aktuellen Wert umfassen, der zu dem Energieeffizienzzustandsparameter gehört und der durch die Verarbeitungseinheit (410) ermittelt wird und verwendet wird, um den Verwaltungsknoten anzuweisen, einen Energiesparzustand der ersten Ressource als einen Energiesparzustand einzustellen, der durch den aktuellen Wert angezeigt wird, und wobei die erste Ressource eine Ressource zum Umsetzen der ersten NF ist.

14. Verwaltungsserver (400) nach Anspruch 13, wobei die Verarbeitungseinheit (410) konfiguriert ist, um den aktuellen Wert gemäß einer Entsprechung zwischen einer aktuellen Dienstlast der ersten NF und dem Energieeffizienzzustandsparameterwert der ersten NF zu erhalten.

15. Verwaltungsserver (400) nach Anspruch 13, wobei die erste NF eine NF ist, deren Dienstlast sich ändert, wobei die aktuelle Dienstlast eine veränderte Dienstlast der ersten NF ist und wobei der Verwaltungsserver (400) außerdem umfasst:
eine erste Anpassungseinheit, die konfiguriert ist, um eine Dienstlastanpassung an den mehreren NFs auszuführen; und
eine Auswahleinheit, die konfiguriert ist, um aus den mehreren NFs die erste NF auszuwählen, deren Dienstlast sich ändert.

16. Verwaltungsserver (400) nach Anspruch 15, wobei die Verwaltungsserver (400) außerdem umfasst:
eine erste Erhalteeinheit, die konfiguriert ist, um zweite Anzeigeinformationen von einem Überwachungsknoten zu erhalten, der die Nutzung einer zweiten Ressource überwacht, wobei die zweiten Anzeigeinformationen verwendet werden, um anzuzeigen, dass die Nutzung der zweiten Ressource geringer als ein voreingestellter Schwellenwert ist; und
eine erste Anpassungseinheit, die konfiguriert ist, um die Dienstlastanpassung an den mehreren NFs auszuführen, wenn die zweiten Anzeigeinformationen erhalten werden, sodass die Energieeffizienzzustandsparameterwerte, die der Dienstlast der NFs entsprechen, die mithilfe der zweiten Ressource umgesetzt werden, gleich sind.

17. Verwaltungsserver (400) nach Anspruch 15, wobei die Verwaltungsserver (400) außerdem umfasst:
eine zweite Erhalteeinheit, die konfiguriert ist, um dritte Anzeigeinformationen von einem Überwachungsknoten zu erhalten, der die Nutzung einer zweiten Ressource überwacht, wobei die dritten Anzeigeinformationen verwendet werden, um anzuzeigen, dass die Nutzung der zweiten NF geringer als ein voreingestellter Schwellenwert ist; und wobei die zweite NF eine beliebige NF aus den mehreren NFs ist; und
wobei die erste Anpassungseinheit konfiguriert ist, um die Dienstlastanpassung an den mehreren NFs auszuführen, wenn die dritten Anzeigeinformationen erhalten werden.

18. Verwaltungsserver (400) nach einem der Ansprüche 13 bis 17, wobei die erste NF zu einem ersten Netzwerkdienst, NS, gehört, der von dem Verwaltungsserver (400) verwaltet wird, und wobei der Verwaltungsserver (400) außerdem eine Synchronisationseinheit umfasst, die konfiguriert ist zum, wenn die erste NF orchestriert wird, Synchronisieren zwischen dem Verwaltungsserver (400) und den Verwaltungsknoten aller NFs in dem ersten NS, der Energieeffizienzzustandsparameterwerte aller NFs, sodass die Energieeffizienzzustandsparameterwerte aller NFs, die in dem Verwaltungsserver aufgezeichnet werden, gleich jenen Werten in den Verwaltungsknoten aller NFs sind.

19. Netzwerkvorrichtung (500), umfassend:
eine Empfangseinheit (510), die konfiguriert ist, um erste Anzeigeinformationen zu empfangen, die von einem Orchestrierer virtualisierter Netzwerkfunktionen (Network Functions Virtualization Orchestrator, NFVO) gesendet werden, wobei die ersten Anzeigeinformationen einen aktuellen Wert eines Energieeffizienzzustandsparameters einer ersten Netzwerkfunktion, NF, umfassen, wobei der Energieeffizienzzustandsparameter ein Parameter ist, der für die erste NF konfiguriert ist, und wobei verschiedene Werte der Energieeffizienzzustandsparameter verschiedene Energiesparzustände der ersten NF anzeigen; und
eine Einstelleinheit (520), die konfiguriert ist, um einen Energiesparzustand einer ersten Ressource als einen Energiesparzustand einzustellen, der durch den aktuellen Wert angezeigt wird, der von der Einstelleinheit (510) empfangen wurde, wobei die erste Ressource eine Ressource zum Umsetzen der ersten NF ist.

20. Netzwerkvorrichtung (500) nach Anspruch 19, wobei die Netzwerkvorrichtung (500) außerdem umfasst:
eine Überwachungseinheit, die konfiguriert ist, um eine Nutzung einer zweiten Ressource zu überwachen; und
eine Sendeeinheit, die konfiguriert ist, um zweite Anzeigeinformationen an den NFVO zu senden, wenn die Nutzung der zweiten Ressource geringer als ein voreingestellter Schwellenwert ist, wobei die zweiten Anzeigeinformationen verwendet werden, um anzuzeigen, dass die Nutzung der zweiten Ressource geringer als der voreingestellte Schwellenwert ist.

## Revendications

1. Procédé de commande d'économie d'énergie, le procédé comprenant les étapes consistant à :
déterminer (210), grâce à un orchestrateur de virtualisation de fonctions de réseau, NFVO, une valeur actuelle d'un paramètre d'état de rendement énergétique d'une première fonction de réseau, NF, le paramètre d'état de rendement énergétique étant un paramètre conçu pour la première NF, et une valeur de paramètres d'état de rendement énergétique indique un état d'économie d'énergie de la première NF ; et
envoyer (220), grâce au NFVO, des premières informations d'indication à un noeud de gestion d'une première ressource, les premières informations d'indication comprenant la valeur actuelle du paramètre d'état de rendement énergétique, et sont utilisées pour donner instruction au noeud de gestion d'établir un état d'économie d'énergie de la première ressource en tant qu'état d'économie d'énergie indiqué par la valeur actuelle, et la première ressource est une ressource permettant de mettre en oeuvre la première NF.

2. Procédé selon la revendication 1, dans lequel la détermination (210), grâce à un NFVO, d'une valeur actuelle d'un paramètre d'état de rendement énergétique d'une première NF consiste à :
obtenir, grâce au NFVO, la valeur actuelle en fonction d'une correspondance entre une charge de service actuelle de la première NF et la valeur de paramètres d'état de rendement énergétique de la première NF.

3. Procédé selon la revendication 2, dans lequel la première NF est une NF dont la charge de service est modifiée, la charge de service actuelle est une charge de service modifiée de la première NF, et avant la détermination, grâce au NFVO, de la valeur actuelle du paramètre d'état de rendement énergétique de la première NF, le procédé consiste en outre à :
exécuter, grâce au NFVO, un réglage de charge de service parmi de multiples NF ; et
sélectionner, grâce au NFVO, parmi de multiples NF, la première NF dont la charge de service est modifiée.

4. Procédé selon la revendication 3, dans lequel avant l'exécution, grâce au NFVO, du réglage de la charge de service parmi de multiples NF, le procédé consiste en outre à :
obtenir, grâce au NFVO, des deuxièmes informations d'indication à partir d'un noeud de surveillance qui surveille l'utilisation d'une seconde ressource, les deuxièmes informations d'indication étant utilisées pour indiquer que l'utilisation de la seconde ressource est inférieure à un seuil prédéfini ; et
l'exécution, grâce au NFVO, du réglage de la charge de service parmi de multiples NF,
l'exécution, grâce au NFVO, lors de l'obtention des deuxièmes informations d'indication, du réglage de la charge de service parmi les multiples NF, de sorte que les valeurs de paramètres d'état de rendement énergétique correspondant à une charge de service des NF mises en oeuvre à l'aide de la seconde ressource sont les mêmes.

5. Procédé selon la revendication 4, dans lequel :
la seconde ressource est une ressource permettant de mettre en oeuvre une fonction de réseau virtuelle, VNF, et le noeud de surveillance est un gestionnaire d'infrastructure virtualisé, VIM, qui gère la seconde ressource ; ou
la seconde ressource est une ressource permettant de mettre en oeuvre une fonction de réseau physique, PNF, et le noeud de surveillance est un système de support de fonctionnement OSS/un système de support d'activités BSS ; ou
la seconde ressource est une ressource permettant de mettre en oeuvre une PNF, et le noeud de surveillance est un système de gestion d'éléments, EMS, qui gère la PNF.

6. Procédé selon la revendication 3, dans lequel avant l'exécution, grâce au NFVO, du réglage de la charge de service parmi les multiples NF, le procédé consiste en outre à :
obtenir, grâce au NFVO, des troisièmes informations d'indication à partir d'un noeud de surveillance qui surveille l'utilisation d'une seconde NF, les troisièmes informations d'indication étant utilisées pour indiquer que l'utilisation de la seconde NF est inférieure à un seuil prédéfini, et la seconde NF est une quelconque NF parmi les multiples NF ; et
l'exécution, grâce au NFVO, du réglage de la charge de service parmi les multiples NF consiste à :
exécuter, grâce au NFVO, lors de l'obtention des troisièmes informations d'indication, le réglage de la charge de service parmi les multiples NF.

7. Procédé selon la revendication 6, dans lequel :
la seconde NF est une VNF, et le noeud de surveillance est un gestionnaire de fonctions de réseau virtualisé, VNFM, qui gère la seconde NF ; ou
la seconde NF est une VNF, et le noeud de surveillance est un EMS qui gère la seconde NF ; ou
la seconde NF est une PNF, et le noeud de surveillance est un OSS/BSS ; ou
la seconde NF est une PNF, et le noeud de surveillance est un EMS qui gère la seconde NF.

8. Procédé selon l'une quelconque des revendications 1 à 7, dans lequel la première NF appartient à un premier service de réseau, NS, géré par le NFVO, et avant la détermination, grâce au NFVO, d'une valeur actuelle d'un paramètre d'état de rendement énergétique d'une première NF, le procédé consiste en outre à :
lors de l'orchestration du premier NS, synchroniser, entre le NFVO et les noeuds de gestion de toutes les NF dans le premier NS, des valeurs de paramètres d'état de rendement énergétique de toutes les NF, de sorte que les valeurs de paramètres d'état de rendement énergétique de toutes les NF qui sont enregistrées dans le NFVO sont les mêmes que celles dans le noeud de gestion de toutes les NF.

9. Procédé selon l'une quelconque des revendications 1 à 8, dans lequel :
la première NF est une VNF, et le noeud de gestion de la première ressource est un VIM ; ou
la première NF est une PNF, et le noeud de gestion de la première ressource est un OSS/BSS ; ou
la première NF est une PNF, et le noeud de gestion de la première ressource est un EMS qui gère la première NF.

10. Procédé de commande d'économie d'énergie, le procédé comprenant les étapes consistant à :
recevoir (310) des premières informations d'indication envoyées par un orchestrateur de virtualisation de fonctions de réseau, NFVO, les premières informations d'indication comprenant une valeur actuelle d'un paramètre d'état de rendement énergétique d'une première fonction de réseau, NF, le paramètre d'état de rendement énergétique est un paramètre conçu pour la première NF, et une valeur de paramètres d'état de rendement énergétique indique un état d'économie d'énergie de la première NF ; et
régler (320) un état d'économie d'énergie d'une première ressource en tant qu'état d'économie d'énergie indiqué par la valeur actuelle, la première ressource étant une ressource permettant de mettre en oeuvre la première NF.

11. Procédé selon la revendication 10, dans lequel le procédé consiste en outre à :
surveiller l'utilisation d'une seconde ressource ; et
envoyer des deuxièmes informations d'indication au NFVO lorsque l'utilisation de la seconde ressource est inférieure à un seuil prédéfini, les deuxièmes informations d'indication étant utilisées pour indiquer que l'utilisation de la seconde ressource est inférieure au seuil prédéfini.

12. Procédé selon la revendication 10 ou 11, dans lequel :
la première NF est une fonction de réseau virtualisée, VNF, et le procédé est exécuté par un gestionnaire d'infrastructure virtualisé, VIM ; ou
la première NF est une fonction de réseau physique, PNF, et le procédé est exécuté par un système de support de fonctionnement OSS/un système de support d'activités BSS ; ou
la première NF est une PNF, et le procédé est exécuté par un système de gestion d'éléments, EMS, qui gère la première NF.

13. Serveur de gestion (400), comprenant :
une unité de traitement (410), conçue pour déterminer une valeur actuelle d'un paramètre d'état de rendement énergétique d'une première fonction de réseau, NF, le paramètre d'état de rendement énergétique étant un paramètre conçu pour la première NF, et une valeur de paramètres d'état de rendement énergétique indique un état d'économie d'énergie de la première NF ; et
une unité d'envoi (420), conçue pour envoyer des premières informations d'indication à un noeud de gestion d'une première ressource, les premières informations d'indication comprenant la valeur actuelle qui est celle du paramètre d'état de rendement énergétique et déterminée par l'unité de traitement (410), et sont utilisées pour donner instruction au noeud de gestion d'établir un état d'économie d'énergie de la première ressource en tant qu'état d'économie d'énergie indiqué par la valeur actuelle, et la première ressource est une ressource permettant de mettre en oeuvre la première NF.

14. Serveur de gestion (400) selon la revendication 13, dans lequel l'unité de traitement (410) est conçue pour obtenir la valeur actuelle en fonction d'une correspondance entre une charge de service actuelle de la première NF et la valeur de paramètres d'état de rendement énergétique de la première NF.

15. Serveur de gestion (400) selon la revendication 13, dans lequel la première NF est une NF dont la charge de service est modifiée, la charge de service actuelle est une charge de service modifiée de la première NF, et le serveur de gestion (400) comprend en outre :
une première unité de réglage, conçue pour exécuter un réglage de charge de service parmi de multiples NF ; et
une unité de sélection, conçue pour sélectionner, parmi de multiples NF, la première NF dont la charge de service est modifiée.

16. Serveur de gestion (400) selon la revendication 15, dans lequel le serveur de gestion (400) comprend en outre :
une première unité d'obtention, conçue pour obtenir des deuxièmes informations d'indication à partir d'un noeud de surveillance qui surveille l'utilisation d'une seconde ressource, les deuxièmes informations d'indication étant utilisées pour indiquer que l'utilisation de la seconde ressource est inférieure à un seuil prédéfini ; et
la première unité de réglage est conçue pour exécuter le réglage de la charge de service parmi de multiples NF lorsque les deuxièmes informations d'indication sont obtenues, de sorte que les valeurs de paramètres d'état de rendement énergétique correspondant à une charge de service des NF mises en oeuvre à l'aide de la seconde ressource sont les mêmes.

17. Serveur de gestion (400) selon la revendication 15, dans lequel le serveur de gestion (400) comprend en outre :
une seconde unité d'obtention, conçue pour obtenir des troisièmes informations d'indication à partir d'un noeud de surveillance qui surveille l'utilisation d'une seconde NF, les troisièmes informations d'indication étant utilisées pour indiquer que l'utilisation de la seconde NF est inférieure à un seuil prédéfini, et la seconde NF est une quelconque NF parmi les multiples NF ; et
la première unité de réglage est conçue pour exécuter le réglage de charge de service parmi les multiples NF lorsque les troisièmes informations d'indication sont obtenues.

18. Serveur de gestion (400) selon l'une quelconque des revendications 13 à 17, dans lequel la première NF appartient à un premier service de réseau, NS, géré par le serveur de gestion (400), et le serveur de gestion (400) comprend en outre une unité de synchronisation, conçue pour : lors de l'orchestration du premier NS, synchroniser, entre le serveur de gestion (400) et les noeuds de gestion de toutes les NF dans le premier NS, des valeurs de paramètres d'état de rendement énergétique de toutes les NF, de sorte que les valeurs d'état de rendement énergétique de toutes les NF qui sont enregistrées dans le serveur de gestion sont les mêmes que celles dans les noeuds de gestion de toutes les NF.

19. Dispositif de réseau (500) comprenant :
une unité de réception (510), conçue pour recevoir des premières informations d'indication envoyées par un orchestrateur de virtualisation de fonctions de réseau, NFVO, les premières informations d'indication comprenant une valeur actuelle d'un paramètre d'état de rendement énergétique d'une première fonction de réseau, NF, le paramètre d'état de rendement énergétique est un paramètre conçu pour la première NF, et des valeurs différentes du paramètre d'état de rendement énergétique indiquent des états d'économie d'énergie différents de la première NF ; et
une unité de réglage (520), conçue pour régler un état d'économie d'énergie d'une première ressource en tant qu'état d'économie d'énergie indiqué par la valeur actuelle reçue par l'unité de réception (510), la première ressource étant une ressource permettant de mettre en oeuvre la première NF.

20. Dispositif de réseau (500) selon la revendication 19, dans lequel le dispositif de réseau (500) comprend en outre :
une unité de surveillance, conçue pour surveiller l'utilisation d'une seconde ressource ; et
une unité d'envoi, conçue pour envoyer des deuxièmes informations d'indication au NFVO lorsque l'utilisation de la seconde ressource est inférieure à un seuil prédéfini, les deuxièmes informations d'indication étant utilisées pour indiquer que l'utilisation de la seconde ressource est inférieure au seuil prédéfini.
